# EUROPÄISCHE PATENTANMELDUNG

(11) **EP 2 123 375 A1**
(43) Veröffentlichungstag der Anmeldung: **25.11.2009**
(21) Anmeldenummer: 09160480.1
(22) Anmeldetag: 18.05.2009
(51) Int. Cl.: B22D 15/02, F16C 7/02, B22D 25/02

(54) **Hohler Pleuel**

(30) Priorität: 20.05.2008 AT 7982008
(71) Anmelder: O. St. Feingussgesellschaft m. b. H., 8605 Kapfenberg (AT)
(72) Erfinder: Pankl, Gerold, 8600, Bruck an der Mur (AT); Gruber, Herbert, 8643, Allerheiligen (AT)
(74) Vertreter: Wirnsberger, Gernot

(57) **Zusammenfassung**

Die Erfindung betrifft einen feingegossenen Pleuel (1) mit einem ersten Pleuelauge (2) und einem zweiten Pleuelauge (3) sowie einem Schaft (4), der zwischen den Pleuelaugen (2, 3) verläuft und zumindest einen Hohlraum (5) umschließt. Um eine einfache Herstellung des Pleuels (1) mit hoher Güte zu ermöglichen, ist erfindungsgemäß vorgesehen, dass der Hohlraum (5) zumindest zwei Öffnungen (6, 7) aufweist, die am Schaft (4) an gegenüberliegenden Enden des Hohlraums (5) angeordnet sind.

## Beschreibung

Die Erfindung betrifft einen feingegossenen Pleuel mit einem ersten Pleuelauge und einem zweiten Pleuelauge sowie einem Schaft, der zwischen den Pleuelaugen verläuft und zumindest einen Hohlraum umschließt.

Bei der Entwicklung von Pleueln z. B. für Sportwagenmotoren kann es darauf ankommen, die Pleuel möglichst leichtgewichtig, aber dennoch belastbar auszubilden, wenn hohe Motordrehzahlen erreicht werden sollen. Diesbezüglich stellen Pleuel mit einem hohlen Schaft eine interessante Variante dar. Durch eine entsprechende Ausbildung mit hohlem Schaft können Pleuel geringer Masse bereitgestellt werden, die auch eine hohe Belastbarkeit im Einsatz erwarten lassen. Gleichzeitig ist aber auch eine möglichst einfache Fertigung gefordert, damit potenziell hoch belastbare Pleuel auch wirtschaftlich effizient hergestellt werden können.

Aus dem Stand der Technik ist es bekannt, einen hohlen Pleuel herzustellen, indem zwei aus Blech gefertigte Teile miteinander durch Schweißen zu einem Pleuel verbunden werden. Wiewohl auf diese Weise leichtgewichtige Pleuel hergestellt werden können, stellt die zwingend vorgesehene Schweißnaht eine mögliche Schwachstelle dar, welche im Einsatz Ausgangspunkt für Materialversagen sein kann.

Ein anderer Ansatz besteht gemäß der Druckschrift EP 1 722 114 A2 darin, hohle Pleuel durch Feingießen herzustellen und dabei im Inneren eines Pleuels vom Schaft zu einem Pleuelauge verlaufende Verstrebungen vorzusehen, um eine große Belastbarkeit des Pleuels bei geringem Gewicht zu erreichen. Wenngleich durch eine derartige Ausbildung äußerst belastbare Pleuel bereitgestellt werden können, so ist doch nachteilig, dass die bei der Pleuelherstellung zur Ausbildung eines hohlen Schaftes notwendigen keramischen Kerne nach dem Gießen nur durch aufwendige Prozessschritte vollständig entfernt werden können.

Hier setzt die Erfindung an. Aufgabe der Erfindung ist es, einen Pleuel der eingangs genannten Art anzugeben, der bei geringem Gewicht und hoher Güte sowie Belastbarkeit gleichzeitig auf einfache Weise herstellbar ist.

Diese Aufgabe wird durch einen Pleuel der eingangs genannten Art gelöst, bei welchem der Hohlraum zumindest zwei Öffnungen aufweist, die am Schaft an gegenüberliegenden Enden des Hohlraums angeordnet sind.

Ein erfindungsgemäßer Pleuel weist neben einer aufgrund einer Herstellung im Feinguss erzielten hohen Güte und dergleichen Belastbarkeit im Einsatz insbesondere den Vorteil auf, dass der Pleuel bei der Herstellung auf einfache Weise in einen einsatzbereiten Zustand gebracht werden kann. Durch die vorgesehene Ausbildung des Hohlraums mit zumindest zwei Öffnungen, die am Schaft an gegenüberliegenden Enden des Hohlraums angeordnet sind, ist sichergestellt, dass jegliche nach dem Gießprozess im Hohlraum befindliche Keramik besonders einfach aus diesem mittels eines Gas- oder Flüssigkeitsstrahls entfernt werden kann. Dabei wird der Strahl über eine erste der zwei Öffnungen in den Hohlraum geführt und das in diesem befindliche Material über die zweite der zwei Öffnungen ausgeblasen, wobei aufgrund der gegenüberliegenden Anordnung der Öffnungen der gesamte Hohlraum entleert wird. Im Vergleich mit alternativen Verfahren, beispielsweise einem Einsatz von löslichen Keramiken, kann auf besonders einfache Weise sichergestellt werden, dass jegliche Keramik aus dem Pleuel entfernt werden kann, ehe dieser eingesetzt wird.

Bevorzugt ist es, dass der Schaft zumindest einen Hohlraum umschließt, der sich etwa von einem das erste Pleuelauge definierenden Bereich bis zu einem das zweite Pleuelauge definierenden Bereich erstreckt, und die Öffnungen des Hohlraums an die genannten Bereiche anschließend angeordnet sind. Durch diese konstruktive Maßnahme ist gewährleistet, dass Keramik durch Beaufschlagung des Hohlraums mit einem Gas-oder Flüssigkeitsstrahl auf einfache Weise zur Gänze aus dem Hohlraum entfernt werden kann. Gleichzeitig ist der so ausgebildete Pleuel besonders leichtgewichtig und weist dennoch im Einsatz eine gute Belastbarkeit auf.

Das erfindungsgemäße Konzept kann auf Pleuel mit beliebig geformten Hohlräumen angewendet werden. Gleichwohl ist es bevorzugt, dass der Schaft zwei Hohlräume umschließt, welche durch einen entlang einer Pleuelachse verlaufenden Verstärkungssteg, der den das erste Pleuelauge definierenden Bereich mit dem das zweite Pleuelauge definierenden Bereich verbindet, getrennt sind. Dabei kann insbesondere vorgesehen sein, dass der Verstärkungssteg im Wesentlichen mit konstanter Stärke ausgebildet ist und an seinen Enden konisch verbreiterte Bereiche aufweist, welche an jene Bereiche anschließen, die das erste Pleuelauge und das zweite Pleuelauge definieren. Die einzelnen Hohlräume können dann getrennt ausgestrahlt bzw. von Keramik befreit werden. Der vorgesehene Verstärkungssteg stellt aufgrund einer durchgängig vom ersten Pleuelauge zum zweiten Pleuelauge verlaufenden Verbindung eine Verstrebung dar, die zu einer höheren Belastbarkeit des Pleuels insgesamt führt. Dieser optional vorgesehene Verstärkungssteg kann mit einer zentralen Ölbohrung ausgebildet sein, was den Vorteil bringt, dass über den Verstärkungssteg gleichzeitig Öl zur Schmierung im Bereich des großen Pleuelauges zu- bzw. nachgeführt werden kann.

Im Rahmen der Erfindung kann vorgesehen sein, dass der Pleuel mit einem ersten Pleuelauge ausgebildet ist, dessen Größe dem zweiten Pleuelauge entspricht. In diesem Fall verläuft der Schaft in seinem äußeren Bereich bzw. im Bereich des Mantels des Schaftes parallel zur Längsachse des Pleuels. Besonders bewährt hat sich aber das erfindungsgemäße Konzept bei einem Pleuel, der mit einem ersten Pleuelauge ausgebildet ist, das kleiner als das zweite Pleuelauge ist, und bei welchem der Schaft in Richtung vom ersten Pleuelauge zum zweiten Pleuelauge verbreiternd verlaufend geformt ist.

Weitere Merkmale, Vorteile und Wirkungen der Erfindung ergeben sich aus dem nachfolgend dargestellten Ausführungsbeispiel, anhand dessen die Erfindung noch näher erläutert ist. In der Zeichnung, auf welche dabei Bezug genommen wird, zeigen:
Fig. 1 einen erfindungsgemäßen Pleuel in Draufsicht;
Fig. 2 einen erfindungsgemäßen Pleuel gemäß Fig. 1 in einer Seitenansicht;
Fig. 3 einen Schnitt entlang der Linie III-III in Fig. 2;
Fig. 4 einen Schnitt entlang der Linie IV-IV in Fig. 1;
Fig. 5 einen Schnitt entlang der Linie V-V in Fig. 1.

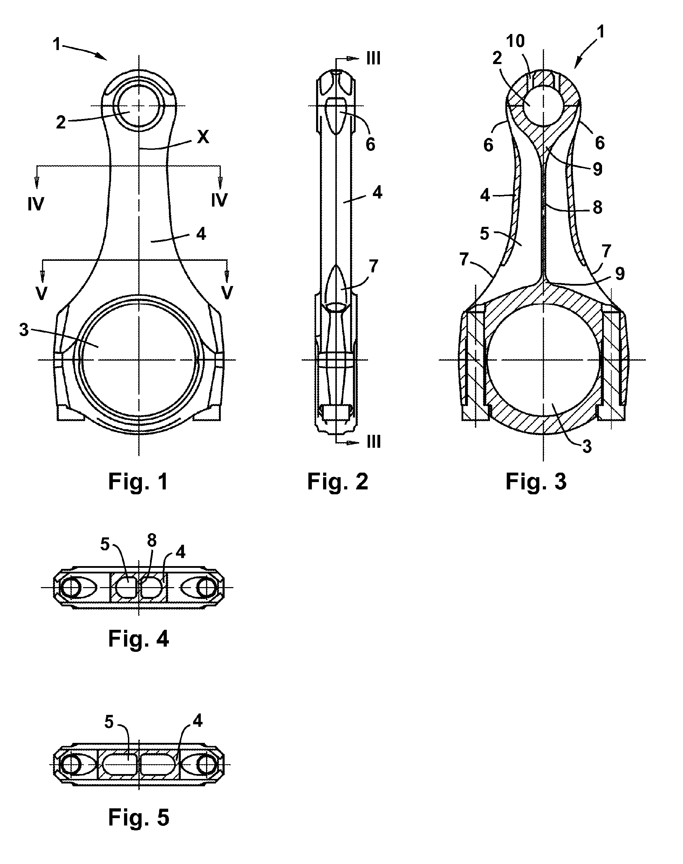

In Fig. 1 bis 5 ist ein erfindungsgemäßer Pleuel 1 in einer möglichen Ausführungsvariante dargestellt. Der Pleuel 1 weist im Bereich eines Pleuelkopfes ein erstes Pleuelauge 2 und im Bereich eines Pleuelfußes ein zweites Pleuelauge 3 auf. Das erste Pleuelauge 2 ist kleiner ausgebildet als das zweite Pleuelauge 3; ein Schaft 4 verbindet jene Bereiche, die das erste Pleuelauge 2 und das zweite Pleuelauge 3 festlegen, wobei der Schaft 4 an den Bereich des ersten Pleuelauges 2 anschließt und zum zweiten Pleuelauge 3 hin in Draufsicht verbreitert ausgeformt ist. Es sind allerdings im Rahmen der Erfindung auch andere Ausführungsvarianten möglich. Beispielsweise können die beiden Pleuelaugen 2, 3 gleich groß ausgeformt sein. In diesem Fall ist der Schaft 4 im Wesentlichen vollumfänglich zu einer Pleuelachse X parallel verlaufend ausgeformt.

Der Schaft 4, der um die Längsachse X des Pleuels 1 verläuft, umschließt zwei Hohlräume 5, welche von dem das erste Pleuelauge 2 definierenden Bereich zu dem das zweite Pleuelauge 3 definierenden Bereich verlaufen. Die Hohlräume 5 sind durch einen Verstärkungssteg 8 voneinander vollständig getrennt. Dieser Verstärkungssteg 8, der nicht zwingend vorgesehen sein muss, sich jedoch in Bezug auf eine Belastbarkeit des Pleuels 1 sehr günstig auswirkt, schließt an die Bereiche an, welche die Pleuelaugen 2, 3 definieren, und ist an seinen Enden mit vom Pleuelzentrum aus betrachtet konisch verbreiterten Bereichen 9 ausgebildet, um eine möglichst gleichmäßige Verteilung von Kräften bzw. eine hohe Belastbarkeit des Pleuels 1 zu gewährleisten.

Der Schaft 4 ist im Bereich beider Hohlräume 5 mit zwei Öffnungen 6, 7 ausgebildet, die sich jeweils im Bereich des ersten Pleuelauges 2 bzw. zweiten Pleuelauges 3 befinden. Diese Öffnungen 6, 7 sind in der dargestellten Variante an den Schmalseiten des Pleuels 1 angeordnet, können aber auch an den planparallelen Breitseiten vorgesehen werden. Wichtig ist, dass die bei jedem Hohlraum 5 vorgesehenen Öffnungen 6, 7 an gegenüberliegenden Enden des Hohlraums 5 angeordnet sind, sodass der Hohlraum 5 letztlich einen Kanal mit Einlass und Auslass darstellt. Durch diese Anordnung ist es möglich, jeden Hohlraum 5 nach Fertigung des Pleuels 1 vollständig oder zumindest im Wesentlichen vollständig von Keramik zu befreien, indem der Hohlraum 5 über eine der beiden Öffnungen 6, 7 mit einem Strahl aus Gas oder einer Flüssigkeit, beispielsweise Wasser, beaufschlagt wird. Mit anderen Worten: Durch die vorgesehenen Öffnungen 6, 7 und deren Lage wird im Zusammenspiel mit dem Hohlraum 5 ein länglicher Kanal geschaffen, welcher ein vollständiges Ausblasen der im Hohlraum 5 befindlichen Keramik ermöglicht.

Wie insbesondere aus Fig. 4 und 5 ersichtlich ist, ist der Pleuel 1 aufgrund der im Schaft 4 vorgesehenen Hohlräume 5 leichtgewichtig ausgebildet, erweist sich jedoch im Einsatz gleichzeitig als hochbelastbar, weil ein Verstärkungssteg 8 vorgesehen ist, der die beiden Hohlräume 5 voneinander trennt und die erstes Pleuelauge 2 und zweites Pleuelauge 3 definierenden Bereiche miteinander verbindet. Die vorgesehenen Öffnungen 6, 7 wirken sich nur wenig auf die Belastbarkeit des Pleuels 1 aus, bringen jedoch die vorstehend dargelegten Vorteile mit sich.

Es versteht sich für den Fachmann, dass Variationen des vorstehend dargestellten Ausführungsbeispiels der Erfindung von dieser erfasst sind. Z. B. muss es sich bei dem Pleuel 1 nicht um eine gerade geteilte Pleuelstange handeln, sondern kann auch eine schräg geteilte Pleuelstange vorliegen. Des Weiteren können im Rahmen der Erfindung selbstverständlich aus dem Stand der Technik bekannte konstruktive Maßnahmen vorgesehen werden, beispielsweise eine in Fig. 3 dargestellte Ölbohrung 10 im Bereich des ersten Pleuelauges 2. Ebenso ist es möglich, ohne den Rahmen der Erfindung zu verlassen, verschiedene metallische Werkstoffe für die Fertigung eines erfindungsgemäßen Pleuels 1 vorzusehen. Beispielsweise können beim Feingießen Legierungen aus Stahl, gegebenenfalls auch vergütbare Legierungen, ebenso wie Leichtmetalllegierungen, beispielsweise Aluminium-, Magnesium- oder Titanlegierungen, eingesetzt werden.

## Patentansprüche

1. Feingegossener Pleuel (1) mit einem ersten Pleuelauge (2) und einem zweiten Pleuelauge (3) sowie einem Schaft (4), der zwischen den Pleuelaugen (2, 3) verläuft und zumindest einen Hohlraum (5) umschließt, **dadurch gekennzeichnet, dass** der Hohlraum (5) zumindest zwei Öffnungen (6, 7) aufweist, die am Schaft (4) an gegenüberliegenden Enden des Hohlraums (5) angeordnet sind.

2. Feingegossener Pleuel (1) nach Anspruch 1, **dadurch gekennzeichnet, dass** der Schaft (4) zumindest einen Hohlraum (5) umschließt, der sich etwa von einem das erste Pleuelauge (2) definierenden Bereich bis zu einem das zweite Pleuelauge (3) definierenden Bereich erstreckt, und die Öffnungen (6, 7) des Hohlraums (5) an die genannten Bereiche anschließend angeordnet sind.

3. Feingegossener Pleuel (1) nach Anspruch 1 oder 2, **dadurch gekennzeichnet, dass** der Schaft (4) zwei Hohlräume (5) umschließt, welche durch einen entlang einer Pleuelachse (X) verlaufenden Verstärkungssteg (8), der den das erste Pleuelauge (2) definierenden Bereich mit dem das zweite Pleuelauge (3) definierenden Bereich verbindet, getrennt sind.

4. Feingegossener Pleuel (1) nach Anspruch 3, **dadurch gekennzeichnet, dass** der Verstärkungssteg (8) im Wesentlichen mit konstanter Stärke ausgebildet ist und an seinen Enden konisch verbreiterte Bereiche (9) aufweist, welche an jene Bereiche anschließen, die das erste Pleuelauge (2) und das zweite Pleuelauge (3) definieren.

5. Feingegossener Pleuel (1) nach Anspruch 4, **dadurch gekennzeichnet, dass** der Verstärkungssteg (8) mit einer zentralen Ölbohrung ausgebildet ist.

6. Feingegossener Pleuel (1) nach einem der Ansprüche 1 bis 5, **dadurch gekennzeichnet, dass** der Pleuel (1) mit einem ersten Pleuelauge (2) ausgebildet ist, das kleiner als das zweite Pleuelauge (3) ist, und der Schaft (4) in Richtung vom ersten Pleuelauge (2) zum zweiten Pleuelauge (3) verbreiternd verlaufend geformt ist.
